# EUROPEAN PATENT APPLICATION

(11) **EP 1 577 570 A1**
(43) Date of publication of application: **21.09.2005**
(21) Application number: 04101140.4
(22) Date of filing: 19.03.2004
(51) Int. Cl.: F16B 37/14, F16B 37/12, F16B 35/04

(54) **THREADEDLY ENGAGEABLE COUPLING DEVICE**

(71) Applicant: Cheng Metal Enterprises Co Ltd, Taiwan (TW)
(72) Inventor: PENG, Jin-Le, Chang-Hua Hsien (TW)
(74) Representative: Poulin, Gérard

(57) **Abstract**

A threadedly engageable coupling device (5) is used with a complementary coupling device (6) for tightening first and second article pieces (71, 72), and includes an abutment head (9), a cylindrical shank (8) extending from the head (9), and a plurality of blade portions (7) disposed on a proximate segment (82) of the shank (8) proximate to the head (9). Each of blade portions (7) has a cutting edge which gradually deviates from the proximate segment (82) when extending towards the head (9) such that when the shank (8) is inserted into a bore (73) in the first article piece (7) to permit the head (9) to abut against the piece (71) by a friction force generated through screw movement of a threaded surface (811) of a distal segment (81) of the shank (8) and a threaded surface (611) of the complementary coupling device (6), the cutting edge incrementally incises the first article piece (71) so as to guard against rotation of the shank (8) relative to the piece (71) to thereby tighten the first and second article pieces (71,72) together.

## Description

This invention relates to a threadedly engageable coupling device, more particularly to a threadedly engageable coupling device that is threadedly engageable with a complementary coupling device for tightening two article pieces together.

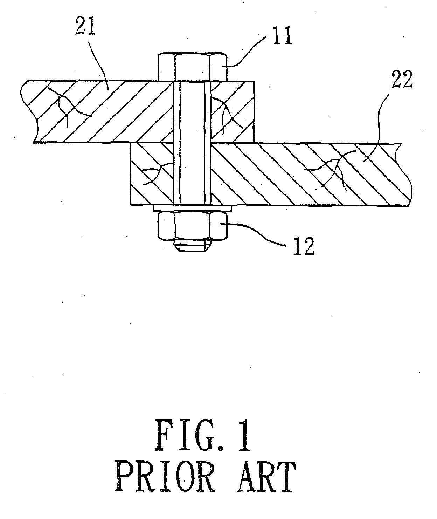

Fig. 1 shows a conventional threadedly engaging tightening assembly for tightening two article pieces 21,22 together, such as wood pieces. The assembly includes a screw bolt 11 passing through the pieces 21,22, and a screw nut 12 threadedly engaging the screw bolt 11 for tightening purposes. Since the screw bolt 11 and the screw nut 12 are rotated relative to each other during the screwing movement, the user has to grip one of the screw bolt 11 and the screw nut 12, and rotate the other one of the screw bolt 11 and the screw nut 12 by a hand tool, thereby resulting in inconvenience during use.

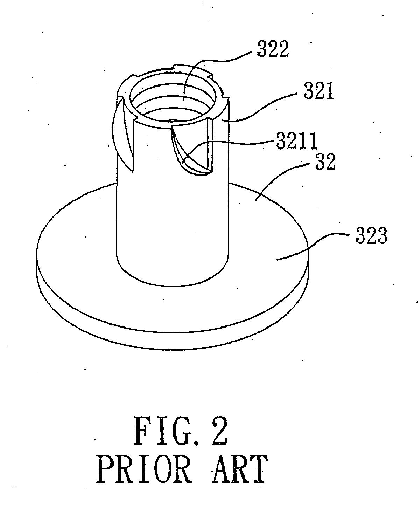

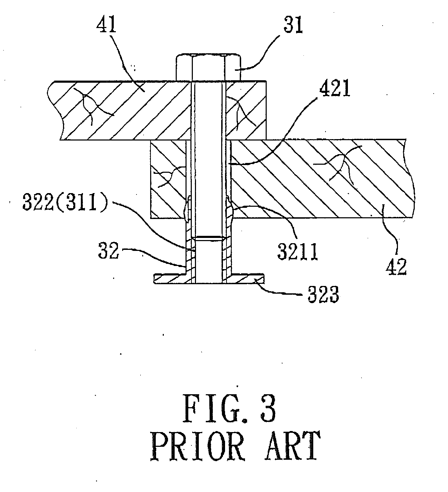

To solve the above problem, another conventional threadedly engaging tightening assembly is proposed. Referring to Figs. 2 and 3, the assembly includes a threadedly engageable coupling device 32 which has an abutment head 323 and a cylindrical shank 321 extending from the head 323 along an axis. The shank 321 has a plurality of blade portions 3211 formed on a distal segment 321 thereof, and an internally threaded surface 322 surrounding the axis so as to threadedly engage an externally threaded surface 311 of a screw bolt 31. The blade portions 3211 incrementally incise one of two wood pieces 41,42 adjacent to a through bore 421 thereof during the screwing movement of the internally and externally threaded surfaces 322,311 so as to guard against rotation of the cylindrical shank 321 relative to the piece 42. As such, the user can move the coupling device 32 along the axis by merely rotating the screw bolt 31. However, since the blade portions 3211 are distal from the abutment wall 323, they have to be moved a relatively long distance in order for the abutment head 323 to abut against the wood piece 42 and they may get stuck in the wood piece 42, thereby adversely affecting the operation of tightening the two wood pieces 41,42.

The object of the present invention is to provide a threadedly engageable coupling device which can engage threadedly a complementary coupling device for tightening two article pieces together and which can be easily operated to abut against one of the pieces.

According to this invention, the threadedly engageable coupling device is adapted for use in a threadedly engaging tightening assembly which includes a complementary coupling device provided with a complementary threaded surface, and which is used for tightening first and second article pieces together. The first article piece is made from a material of a. first hardness, and has abutment and tightened wall surfaces opposite to each other, and a tubular bore extending through the abutment and tightened wall surfaces.

The threadedly engageable coupling device includes an abutment head, a cylindrical shank, and a plurality of blade portions which are of an integrally formed structure.

The abutment head has an abutment wall which extends in radial directions, and which has a central area and an abutment peripheral area surrounding the central area.

The cylindrical shank extends from the central area along an axis, and has an outer diameter that is smaller than a caliber of the tubular bore. The cylindrical shank includes proximate and distal segments relative to the central area, and a middle segment that is interposed between the proximate and distal segments, and that forms a juncture with the proximate segment. The distal segment has a primary threaded surface which is adapted to mesh with the complementary threaded surface, and is adapted to be moved relative to the complementary coupling device along the axis by a friction force that is generated through screwing movement of the primary threaded surface relative to the complementary threaded surface.

The blade portions are disposed on the proximate segment, and are angularly displaced from one another about the axis. Each of the blade portions is made from a material of a second hardness that is greater than the first hardness of the first article piece, and extends from the proximate segment radially and outwardly to terminate at a cutting edge. The cutting edge is configured to gradually deviate from the proximate segment as the cutting edge extends from the juncture towards the abutment wall. As such, when the cylindrical shank is inserted into the tubular bore from the first tightened wall surface to permit the abutment wall to be brought to abut against the first tightened wall surface by the friction force, the cutting edge incrementally incises the first article piece along the axis towards the first abutment wall surface so as to guard against rotation of the cylindrical shank relative to the first article piece during the screwing movement, thereby tightening the first and second article.pieces together.

Other features and advantages of the present invention will become apparent in the following detailed description of the preferred embodiments of the invention, with reference to the accompanying drawings, in which:
Fig. 1 is a sectional schematic view of a conventional threadedly engaging tightening assembly for tightening two article pieces together;
Fig. 2 is a perspective view of another conventional threadedly engageable coupling device;
Fig. 3 is a sectional schematic view of the conventional threadedly engageable coupling device of Fig..2 when used with a screw bolt for tightening two article pieces together;
Fig. 4 is a perspective view of the first preferred embodiment of a threadedly engageable coupling device according to this invention;
Fig. 5 is a sectional schematic view of the first preferred embodiment when used with a screw bolt for tightening two article pieces together;
Fig. 6 is a sectional schematic view of the first preferred embodiment when an abutment head thereof abuts against one of the tightened pieces;
Fig. 7 is a perspective view of the second preferred embodiment of a threadedly engageable coupling device according to this invention;
Fig. 8 is a sectional schematic view of the second preferred embodiment when used with a screw nut for tightening two article pieces together; and
Fig. 9 is a sectional schematic view of the second preferred embodiment when an abutment head thereof abuts against one of the tightened pieces.

Before the present invention is described in greater detail, it should be noted that same reference numerals have been used to denote like elements throughout the specification.

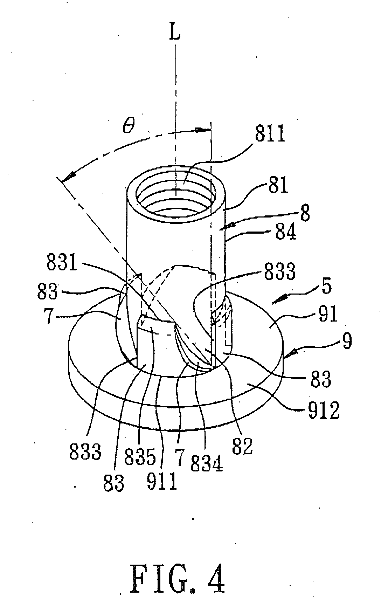

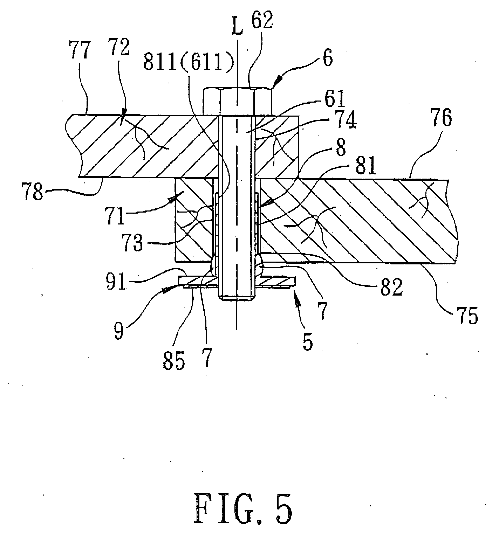

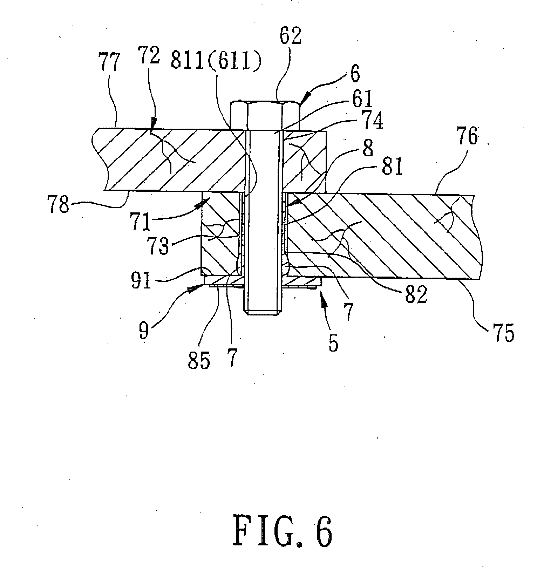

Referring to Figs. 4 to 6, the first preferred embodiment of a threadedly engageable coupling device 5 according to the present invention is shown to be used with a complementary coupling device 6 to form a threadedly engaging tightening assembly for tightening first and second article pieces 71, 72 together, such as wood, rubber or plastic pieces. The first and second article pieces 71,72 respectively have first tightened and abutment wall surfaces 75, 76 and second tightened and abutment wall surfaces 77,78 opposite to each other, and first and second tubular bores 73,74 extending through the first and second abutment and tightened wall surfaces 75,76,77,78, respectively. In this embodiment, the complementary coupling device 6 is a screw bolt which includes a bolt stem 61 that is configured to extend through the second tubular bore 74 in the second article piece 72, and that has an outer threaded surface 611 to serve as a complementaxy threaded surface, and a bolt head 62 that is connected to the bolt stem 61 to abut against the second tightened wall surface 77 of the second article piece 72.

The threadedly engageable coupling device 5 comprises an abutment head 9, a cylindrical shank 8, and a plurality of blade portions 7. The abutment head 9 has an abutment wall 91 which extends in radial directions, and which has a central area 911 and an abutment peripheral area 912 that surrounds the central area 911.

The cylindrical shank 8 extends from the central area 911 of the abutment wall 91 along an axis (L), and has a first outer diameter that is smaller than a caliber of the first tubular bore 73 in the first article piece 71. The cylindrical shank 8 includes proximate and distal segments 82, 81 relative to the central area 911, and a middle segment 84 which is interposed between the proximate and distal segments 82,81, and which forms a juncture 831 with the proximate segment 82. The cylindrical shank 8 has an inner tubular wall which extends along the axis (L) and through the distal segment 81, and which has an inner threaded surface 811 to serve as a primary threaded surface so as to mesh with the outer threaded surface 611 of the complementary coupling device 6, i.e. the screw bolt. Thus, the cylindrical shank 8 is adapted to be moved relative to the complementary coupling device 6. along the axis (L) by a friction force generated through screwing movement of the inner threaded surface 811 relative to the outer threaded surface 611.

The blade portions 7 are disposed on and are integrally formed with the proximate segment 82, and are angularly displaced from one another about the axis (L). Each of the blade portions 7 is made from a material of a hardness that is greater than that of the first article piece 71. Each of the blade portions 7 extends from the proximate segment 82 radially and outwardly, and terminates at a cutting edge. The cutting edge is configured to gradually deviate from the proximate segment 82 as the cutting edge extends from the juncture 831 towards the abutment wall 91. As such, when the cylindrical shank 8 is inserted into the first tubular bore 73 from the first tightened wall surface 75 to permit the abutment wall 91 to be brought to abut against the first tightened wall surface 75 by the friction force, the cutting edge incrementally incises the first article piece 71 along the axis (L) towards the first abutment wall surface 76 so as to guard against rotation of the cylindrical shank 8 relative to the first article piece 71 during the screwing movement to thereby tighten the first and second article pieces 71,72 together.

In particular, the blade portions 7 and the cylindrical shank 8 are formed by punching a cylindrical blank body. The cylindrical blank body includes a proximate segment blank which has an inner annular blank portion that is substantially of the same shape and dimension as the proximate segment 82, and an outer annular blank portion that surrounds the inner annular blank portion about the axis (L). The outer annular blank portion has a second outer diameter that is slightly smaller than the caliber of the first tubular bore 73, and that is larger than the first outer diameter of the cylindrical shank 8 so as to form an annular shoulder 835 in proximity to the juncture 831. Preferably, the annular shoulder 835 is configured to converge from the proximate segment 82 towards the middle segment 84 along a direction parallel to the axis so as to ease the incremental incision of the cutting edge into the first article piece 71.

Moreover, a plurality of block regions 83 are angularly displaced from one another about the axis (L). Each of the block regions 83 is alternately positioned with a corresponding one of the blade portions 7. The block regions 83 are formed by keeping a plurality of corresponding areas of the outer annular blank portion intact when the outer annular blank portion is punched to form the blade portions 7.

Each of the block regions 83 is dimensioned such that when the abutment wall 91 is brought to abut against the first tightened wall surface 75, the block regions 83 are brought to abut against the first article piece 71 in the first tubular bore 73, and the distal segment 81 is in the first tubular bore 73. Preferably, each of the block regions 83 has distal and proximate edges which are respectively disposed at the juncture 831 and the central area 911 and which respectively have smaller and larger lengths, respectively, a first lateral side face 833 which extends in the direction parallel to the axis (L) to interconnect ends of the distal and proximate edges, and a second lateral side face 834 which interconnects other ends of the distal and proximate edges and which is connected to the first lateral side face 833 of the adjacent block region 83 so as to define an included angle of about 10 to 45 degrees.

As illustrated, in use, after the bolt stem 61 of the screw bolt 6 passes through the first and second tubular bores 73,74, the inner threaded surface 811 of the cylindrical shank 8 is engaged threadedly with the outer threaded surface 611. At this time, by rotating the screw bolt 6, the cutting edges of the blade portions 7 can incrementally incise the first article piece 71, and the block regions 83 can abut against the first article piece 71 in the first tubular bore 73, thereby guarding against the rotation of the cylindrical shank 8 relative to the first article piece 71. As such, the threadedly engageable coupling device 5 is moved gradually along the axis (L) by the screwing movement to permit abutment of the abutment wall 91 against the first tightened wall surface 75 for tightening the first and second article pieces 71, 72 together.

Furthermore, a label tape 85 is adhered to an outer surface of the abutment wall 91 for marking purposes.

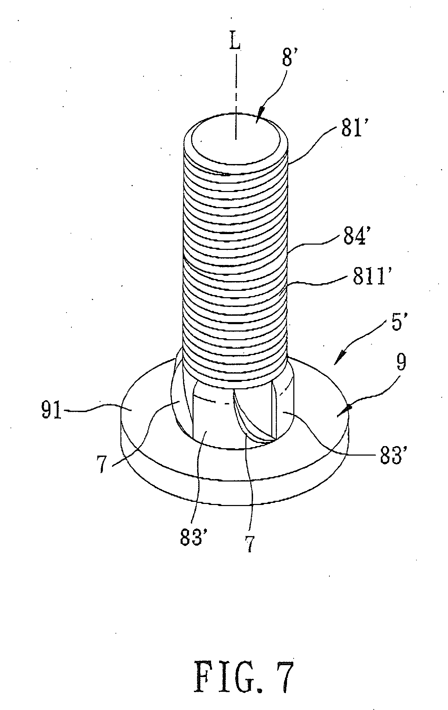

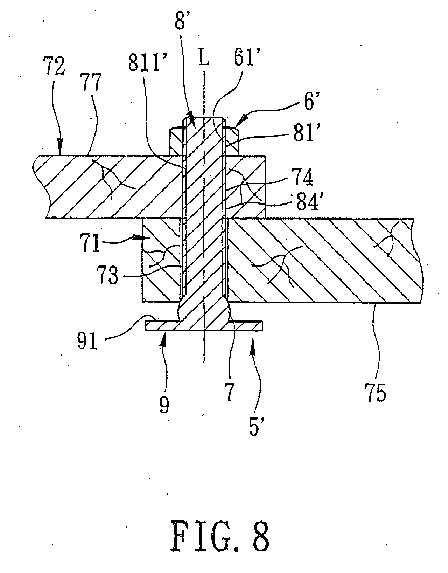

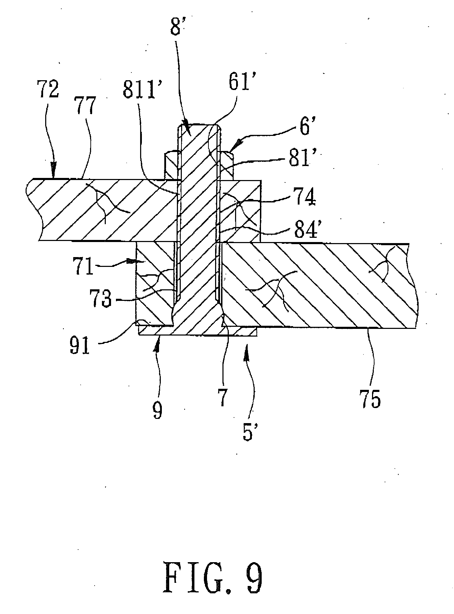

Referring to Figs. 7 to 9, the second preferred embodiment of the threadedly engageable coupling device 5' according to the present invention is shown to be similar to the previous embodiment in construction. The differences.reside in that the cylindrical shank 8' is inserted into the first tubular bore 73 in the first article piece71 from the first tightened wall surface 75, and the middle segment 84' extends through the second tubular bore 74 so as to permit the distal segment 81' to extend outwardly of the second tightened wall surface 77 of the second article piece 72, and that the distal segment 81' has an outer surrounding wall which extends to the middle segment 84', which surrounds the axis (L) , and which has an outer annular threaded surface 811' to serve as the primary threaded surface. The complementary coupling device 6' is a screw nut which has an inner annular threaded surface 61' to serve as the complementary threaded surface.

In use, after the cylindrical shank 8' is inserted into the tubular bore 73 in the first article piece 71, the distal segment 81' extends outwardly of the second tubular bore 74, and the inner annular threaded surface 61' is engaged threadedly with the outer annular threaded surface 811'. The rotation of the cylindrical shank 8 relative to the first article piece 71 can be prevented by the incremental incision of the cutting edges of the blade portions 7 into the first article piece 71 and by the abutment of the block regions 83' against the first article piece 71 in the first tubular bore 73. As such, the threadedly engageable coupling device 5 is moved gradually along the axis (L) by the screwing movement to permit abutment of the abutment wall 91 against the first tightened wall surface 75 for tightening the first and second article pieces 71,72 together.

## Claims

1. A threadedly engageable coupling device (5,5') for use in a threadedly engaging tightening assembly which includes a complementary coupling device (6,6') provided with a complementary threaded surface (611,61'), and which is used for tightening first and second article pieces (71, 72) together, the first and second article pieces (71,72) respectively having first tightened and abutment wall surfaces (75,76) and second tightened and abutment wall surfaces (77,78) opposite to each other, the first article piece (71) being made from a material of a first hardness, and having a tubular bore (73) that extends through the first abutment and tightened wall surfaces (75,76), said threadedly engageable coupling device (5,5') comprising:
an abutment head (9) having an abutment wall (91) which extends in radial directions, and which has a central area (911) and an abutment peripheral area (912) surrounding said central area (911); and
a cylindrical shank (8,8') which extends from said central area (911) along an axis (L), and which has a first outer diameter that is smaller than a caliber of the tubular bore (73), said cylindrical shank (8,8') including proximate and distal segments (82,81,81') relative to said central area (911), and a middle segment (84,84') that is interposed between said proximate and distal segments (82,81,81'), and that forms a juncture (831) with said proximate segment (82), **characterized in that**:
said distal segment (81,81') has a primary threaded surface (811,811') which is adapted to mesh with the complementary threaded surface (611,61'), and being adapted to be moved relative to the complementary coupling device (6,6') along the axis (L) by a friction force that is generated through screwing movement of said primary threaded surface (811,811') relative to the complementary threadedsurface (611,61');
a plurality of blade portions (7) being disposed on said proximate segment (82), and which are angularly displaced from one another about the axis (L) , each of said blade portions (7) being made from a material of a second hardness that is greater than the first hardness, each of said blade portions (7) extending from said proximate segment (82) radially and outwardly, and terminating at a cutting edge, said cutting edge being configured to gradually deviate from said proximate segment (82) as said cutting edge extends from said juncture (831) towards said abutment wall (91) such that when said cylindrical shank (8,8') is inserted into the tubular bore (73) from the first tightened wall surface (75) to permit said abutment wall (91) to be brought to abut against the first tightened wall surface (75) by the friction force, said cutting edge incrementally incises the first article piece (71) along the axis (L) towards the first abutment wall surface (76) so as to guard against rotation of said cylindrical shank (8,8') relative to the first article piece (71) during the screwing movement, thereby tightening the first and second article pieces (71,72) together.

2. A threadedly engageable coupling device according to Claim 1, **characterized in that** said blade portions (7) are integrally formed with said cylindrical shank (8,8').

3. A threadedly engageable coupling device according to Claim 2, **characterized in that** said blade portions (7) and said cylindrical shank (8,8') are formed by punching a cylindrical blank body, said cylindrical blank body including a proximate segment blank which has an inner annular blank portion that is substantially of the same shape and dimension as said proximate segment, and an outer annular blank portion that surrounds said inner annular blank portion about the axis (L), said outer annular blank portion having a second outer diameter that is slightly smaller than the caliber of the tubular bore (73), and that is larger than the first outer diameter so as to form an annular shoulder (835) in proximity to said juncture (831).

4. A threadedly engageable coupling device according to Claim 3, **characterized in that** said annular shoulder (835) is configured to converge from said proximate segment (82) towards said middle segment (84,84') along a direction parallel to the axis (L) so as to ease the incremental incision of said cutting edge into the first article piece (71).

5. A threadedly engageable coupling device according to Claim 4, further **characterized by** a plurality of block regions (83) which are angularly displaced from one another about the axis (L), and which are alternately positioned with corresponding ones of said blade portions (7), said block regions (83) being formed by keeping a plurality of corresponding areas of said outer annular blank portion intact when said outer annular blank portion is punched to form said blade portions (7).

6. A threadedly engageable coupling device according to Claim 5, **characterized in that** each of said block regions (83) is dimensioned such that when said abutment wall (91) is brought to abut against the first tightened wall surface (75), said block regions (83) are brought to abut against the first article piece (71) in the tubular bore (73).

7. A threadedly engaging tightening assembly used for tightening first and second article pieces (71,72) together, the first and second article pieces (71,72) respectively having first tightened and abutment wall surfaces (75,76) and second tightened and abutment wall surfaces (77,78) opposite to each other, the first article piece (71) being made from a material of a first hardness, and having a tubular bore (73) that extends through the first abutment and tightened wall surfaces (75,76) , said threadedly engaging tightening assembly comprising:
a complementary coupling device (6,6') provided with a complementary threaded surface (611,61'); and
a threadedly engageable coupling device (5,5') including:
an abutment head (9) having an abutment wall (91) which extends in radial directions, and which has a central area (911) and an abutment peripheral area (912) surrounding said central area (911), and
a cylindrical shank (8,8') which extends from said central area (911) along an axis (L), and which has an outer diameter that is smaller than a caliber of the tubular bore (73), said cylindrical shank (8,8') including proximate and distal segments (82,81,81') relative to said central area (911), and a middle segment (84,84') that is interposed between said proximate and distal segments (82,81,81'), and that forms a juncture (831) with said proximate segment (82), **characterized in that**:
said distal segment (81,81') having a primary threaded surface (811,811') which is disposed to mesh with said complementary threaded surface (611,'61'), and is moved relative to said complementary coupling device (6,6') along the axis (L) by a friction force generated through screwing movement of said primary threaded surface (811,811') relative to said complementary threaded surface (611,61'),
said threadedly engageable coupling device (5,5') further including a plurality of blade portions (7) which are disposed on said proximate segment (82), and which are angularly displaced from one another about the axis (L) , each of said blade portions (7) being made from a material of a second hardness that is greater than the first hardness, each of saidblade portions (7) extending from said proximate segment (82) radially and outwardly, and terminating at a cutting edge, said cutting edge being configured to gradually deviate from said proximate segment (82) as said cutting edge extends from said juncture (831) towards said abutment wall (91) such that when said cylindrical shank (8,8') is inserted into the tubular bore (73) from the first tightened wall surface (75) to permit said abutment wall (91) to be brought to abut against the first tightened wall surface (75) by the friction force, said cutting edge incrementally incises the first article piece (71) along the axis (L) towards the first abutment wall surface (76) so as to guard against rotation of said cylindrical shank (8,8') relative to the first article piece (71) during the screwing movement, thereby tightening the first and second article pieces (71,72) together.

8. A threadedly engaging tightening assembly according to Claim 7, **characterized in that** said cylindrical shank (8) has an inner tubular wall which extends along the axis (L) and through said distal segment (81), and which has an inner threaded tubular surface (811) to serve as said primary threaded surface (811), said cylindrical shank (8) extending from said central area (911) such that said distal segment (81) is in the tubular bore (73) when said abutment wall (91) is brought to abut against the first tightened wall surface (75),
said complementary coupling device (6) being configured to be a bolt which includes a bolt stem (61) that is configured to extend through the second article piece (72) and into said inner tubular wall, and that has an outer threaded surface (611) to serve as said complementary threaded surface (611), and a bolt head (62) that is connected to said bolt stem (61) and that is adapted to abut against the second tightened wall surface (77) when the first and second article pieces (71,72) are tightened together.

9. A threadedly engaging tightening assembly according to Claim 7, **characterized in that** when said cylindrical shank (8') is inserted into the tubular bore (73) from the first tightened wall surface (75), said middle segment (84') is adapted to extend through the second article piece (72) so as to permit said distal segment (81') to extend outwardly of the second tightened wall surface (77) of the second article piece (72), said distal segment (81') having an outer surrounding wall which surrounds the axis (L), and which has an outer annular threaded surface (811') to serve as said primary threaded surface (811'), said complementary coupling device (6') being configured to be a nut which has an inner annular threaded surface (61') to serve as said complementary threaded surface (61').
